# EUROPEAN PATENT SPECIFICATION

(11) **EP 4 108 704 B1**
(45) Date of publication and mention of the grant of the patent: **06.08.2025**
(21) Application number: 22177957.2
(22) Date of filing: 08.06.2022
(51) Int. Cl.: C08G 73/10, C08J 5/18, C09D 179/08

(54) **POLYIMIDE COPOLYMER AND POLYIMIDE FILM USING THE SAME**
POLYIMID-COPOLYMER UND POLYIMID-FILM ENTHALTEND DAS POLYIMID-COPOLYMER
COPOLYMÈRE POLYIMIDE ET FILM DE POLYIMIDE L'UTILISANT

(30) Priority: 24.06.2021 KR 20210082004
(43) Date of publication of application: 28.12.2022
(73) Proprietor: Jeonju University Office of Industry-University Cooperation, Jeonju-si, Jeollabuk-do 55069 (KR)
(72) Inventor: Chang, Jin Hae, Seoul (KR); Kim, Hong Kun, Seoul (KR); Kwac, Lee Ku, Jeonju-si, Jeollabuk-do (KR); Lee, Seon Ju, Jeonju-si, Jeollabuk-do (KR); Choi, Moon Young, Jeonju-si, Jeollabuk-do (KR)
(74) Representative: Schön, Christoph

(56) References cited:
- EP-A1- 3 418 318
- WO-A1-2021/070912
- CN-A- 110 643 041

## Description

### [BACKGROUND OF THE INVENTION]

### 1. Field of the Invention

The present invention relates to a polyimide copolymer and a polyimide film using the same, and more specifically, to a polyimide copolymer which includes a plurality of monomers or has a polymer structure and a polyimide film prepared using the same.

### 2. Description of the Related Art

Polyimide (PI) copolymer is a polymer having a heteroimide ring in a main chain thereof, and may be prepared by performing polycondensation of aromatic dianhydride and aromatic diamine, followed by performing imidization thereof. The polyimide copolymer has excellent heat resistance, mechanical properties, flame retardancy and low dielectric constant, thereby having a wide range of use such as an electronic material, a coating material, a molding material, a composite material and the like.

However, the polyimide copolymer may have a low transmittance in the visible light region due to a high-density aromatic ring structure. For example, the transmittance may be rapidly reduced at a wavelength of about 500 nm, such that the polyimide copolymer may be colored brown or yellow, and there is a limit in application thereof to fields requiring transparency and high transmittance.

Recently, research to apply a polyimide film with improved heat resistance and mechanical properties to flexible displays, solar panels, and the like has been actively conducted. For example, in order to improve the transparency of the polyimide film, a method of purifying a monomer and a solvent with high purity to polymerize the same has been attempted.

Korean Patent Laid-Open Publication No. 10-2007-0114280 discloses an example of a polyimide film, but it is not sufficient to improve the transmittance thereof.
WO 2021/070912 A1 discloses a polyimide resin composition containing a polyimide resin and a crosslinking agent that has at least two oxazolyl groups, wherein the polyimide resin has constituent units derived from a tetracarboxylic acid dianhydride and constituent units derived from a diamine which further include constituent units derived from a diamine that has a sulfonyl group in the structure and constituent units derived from a specific compound typified by 3, 5-DABA.
EP 3 418 318 A1 discloses a polyimide polymer including a repeating unit represented by 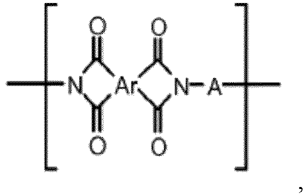 wherein Ar is a tetravalent organic group derived from a tetracarboxylic dianhydride containing an aliphatic structure, and A includes 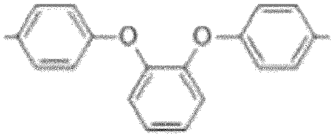 and at least one divalent organic group derived from an aromatic group-containing diamine other than 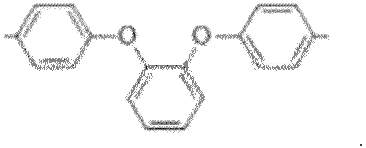 CN 110 643 041 A discloses a colorless transparent polyimide film with an adjustable refractive index comprising a polyimide body, wherein an additive is evenly dispersed in the polyimide body, and the additive is nanometer zinc oxide with the surface covered with zinc carbonate, the particle size of the nanometer zinc oxide is 20-120 nm, and covering thickness of the zinc carbonate is 3-25 nm, and wherein the weight of the additive accounts for 0.5 wt% - 18 wt% of the total weight of the polyimide film.

### [SUMMARY OF THE INVENTION]

According to an aspect of the present invention, there is provided a polyimide copolymer having improved optical characteristics and durability as claimed in claim 1.

According to an aspect of the present invention, there is provided a polyimide film prepared of the polyimide copolymer.

In exemplary embodiments, a polyimide copolymer includes a structural unit derived from dianhydride represented by Formula 1 below, and a structural unit derived from aromatic diamine including an ether group:

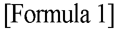

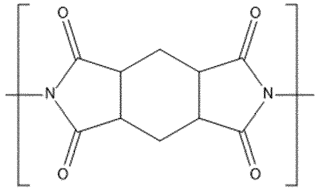

The structural unit derived from the aromatic diamine includes a first structural unit represented by Formula 3 below and a second structural unit represented by Formula 4 below: 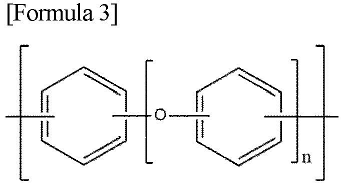 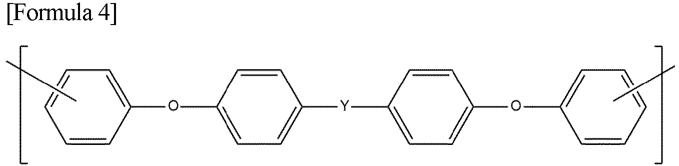 in Formulas 3 and 4, n may be an integer of 1 to 3, and Y may be -S(=O)₂- or -C(CF₃)₂-. The structural unit derived from the aromatic diamine includes includes the first structural unit and the second structural unit in a molar ratio of 8:2 to 2:8.

In some embodiments, the first structural unit may include a structural unit represented by Formula 5 below and a structural unit represented by Formula 6 below:

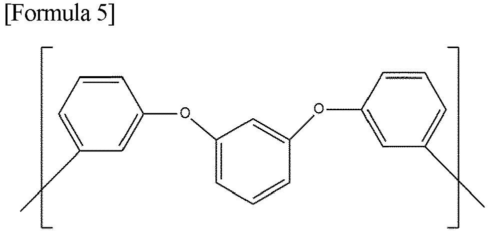

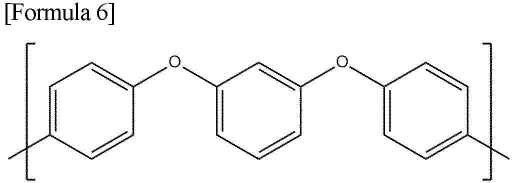

For example, the first structural unit may include the structural unit represented by Formula 5 and the structural unit represented by Formula 6 in a molar ratio of 9:1 to 1:9, and preferably, 6:4 to 2:8.

In some embodiments, the second structural unit may include a structural unit represented by Formula 8 below and a structural unit represented by Formula 9 below:

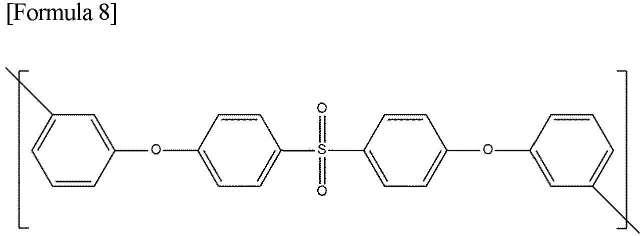

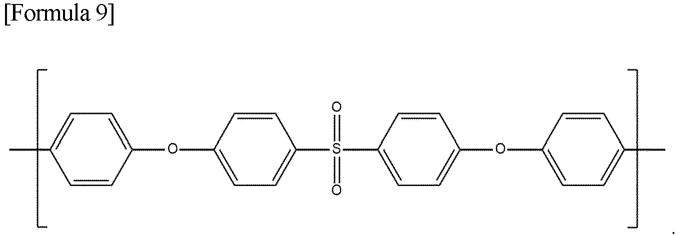

For example, the second structural unit may include the structural unit represented by Formula 8 and the structural unit represented by Formula 9 in a molar ratio of 9:1 to 1:9, and preferably, 8:2 to 6:4.

According to exemplary embodiments, the polyimide copolymer may have an intrinsic viscosity of 0.5 dl/g to 1.2 dl/g, a weight average molecular weight of 50,000 g/mol to 200,000 g/mol, and a glass transition temperature (Tg) of 200°C to 400°C.

According to another aspect of the present invention, there is provided a polyimide film including the above-described polyimide copolymer.

In some embodiments, the polyimide film may have a yellow index (YI) of 4.5 or less measured at a thickness of 70 µm in accordance with rules set by ASTM E313, and a transmittance of 85% or more at a wavelength of 550 nm.

The polyimide copolymer according to embodiments of the present invention may have improved optical characteristics such as light transmittance and yellow index due to the structural units including an alicyclic structure. In addition, the polyimide copolymer may have improved heat resistance and solvent resistance due to the structural units including an aromatic structure linked with an ether group.

Further, the polyimide copolymer may have a high intrinsic viscosity, thus to improve solubility in a polar solvent, and thereby enhance moldability and workability.

Furthermore, the polyimide copolymer may provide a polyimide film having improved heat resistance and mechanical strength, while improving optical characteristics by including heterogeneous structural units. Accordingly, it is possible to improve the mechanical properties and chemical stability of the polyimide film even under extreme hot and humid conditions, and prevent a decrease in the transmittance in a visible light region.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a graph illustrating FR-IR spectrum of a polyimide film according to Example 1;
FIG. 2 is a graph illustrating ¹³C-NMR spectrum of the polyimide film according to Example 1; and
FIG. 3 is a graph illustrating UV transmittance spectra of polyimide films according to Examples 1 to 6.

### [DETAILED DESCRIPTION OF THE INVENTION]

According to embodiments of the present invention, a polyimide copolymer includes a structural unit derived from dianhydride represented by Formula 1 below and a structural unit derived from aromatic diamine including an ether group.

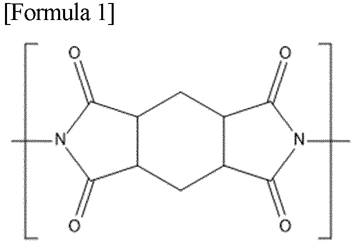

As the polyimide copolymer has an alicyclic structure represented by Formula 1 above, charge transfer complex (CTC) due to *π* electrons of the aromatic structure may be suppressed. In this case, the polyimide copolymer may have a high transmittance in the visible light region, and improved optical characteristic with a low yellow index (YI).

For example, the polyimide copolymer may have a yellow index (YI) of 4.5 or less, preferably 4.0 or less, and more preferably 3.0 or less. The yellow index (YI) may be measured on a specimen having a thickness of 70±4 µm in accordance with rules set by ASTM E313.

For example, the polyimide copolymer may have a light transmittance of 80% or more at a wavelength of 550 nm, and preferably 85% or more. The light transmittance may be measured on the specimen having a thickness of 70±4 µm at a wavelength of 550 nm using a UV spectrometer.

The structural unit derived from the aromatic diamine may allow the polyimide copolymer to have desired heat resistance and strength. For example, the aromatic structure may allow the polyimide copolymer to have high stability to heat, and improved mechanical properties due to the rigid structure.

In addition, the structural unit derived from the aromatic diamine includes the ether group, such that movement of π electrons of the adjacent aromatic structures may be limited, and thereby improving optical characteristics.

In some embodiments, a molar ratio of the structural unit derived from the dianhydride to the structural unit derived from the aromatic diamine may be 4:6 to 6:4, and preferably 4.5:5.5 to 5.5:4.5. For example, the molar ratio of the structural unit derived from the dianhydride to the structural unit derived from the aromatic diamine may be 5:5. Within the above range, visible light transmittance of the polyimide copolymer may be improved, while improving mechanical properties and heat resistance thereof.

The polyimide copolymer includes a repeating unit represented by Formula 2 below. 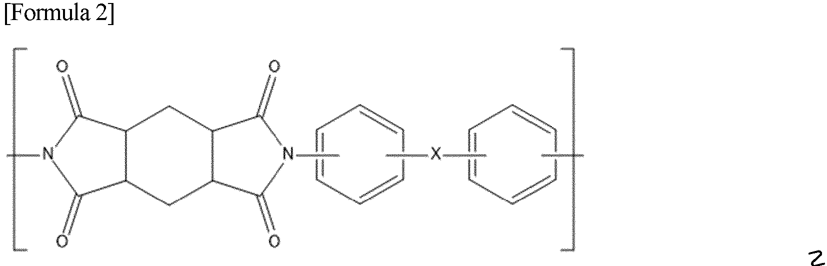 In Formula 2 above, X may be at least one of -O-, 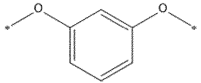 and further X is, Y may be -O-, -S(=O)₂- or -C(CF₃)₂-, and * is a bond.

The repeating unit represented by Formula 2 above is is included in 100 mol% mol% based on a total repeating unit of the polyimide copolymer. In this case, heat resistance and mechanical properties may be improved, and absorption due to the aromatic structure may be suppressed to improve transmittance in the visible light region.

According to exemplary embodiments, the structure unit derived from the aromatic diamine may include a first structural unit represented by Formula 3 below and a second structural unit represented by Formula 4 below.

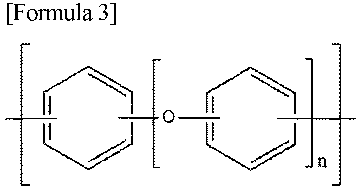

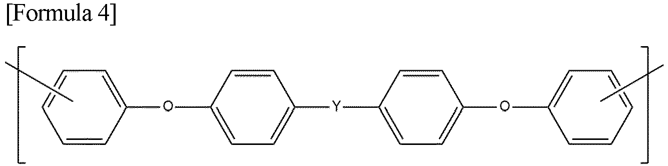

In Formula 3 above, n may be an integer of 1 to 3, and in Formula 4 above, Y may be -S(=O)₂- or -C(CF₃)₂-.

As the first structural unit has only an ether bond in a main chain and has a bent structure as a whole by the ether group, the polyimide copolymer may have high optical transparency in the visible region by limiting movement of *π* electrons. In addition, intermolecular stacking of the polyimide copolymer may be increased due to the first structural unit, and mechanical strength and initial modulus may be improved by increasing an attractive force between chains.

In the second structural unit, aromatic rings may be connected with each other by a substituent (CF₃) having a high electronegativity or a polar functional group (SO₂), thereby reducing a charge transfer complex phenomenon caused by *π* electrons. In addition, as a substituent or functional group having a large volume is present in the main chain, movement of molecules is suppressed and free volume required for movement is increased, such that the polyimide copolymer may have a high glass transition temperature.

The first structural unit includes at least one of structural units represented by Formulas 5 to 7 below.

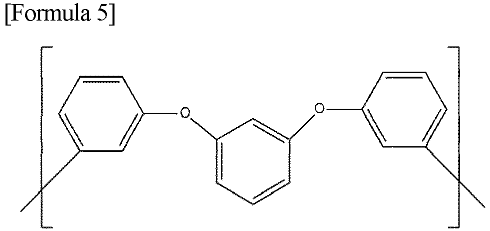

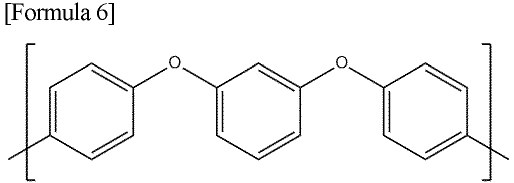

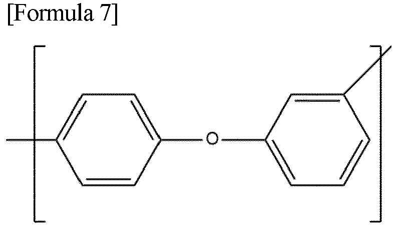

In some embodiments, the first structural unit may include the structural unit represented by Formula 5 above and the structural unit represented by Formula 6 above.

In the structural unit represented by Formula 5 above, a bonding site with other structural units is located at a meta position of an aromatic ring, such that the copolymer may have a bent structure as a whole. In this case, the optical characteristics may be improved by limiting the movement of π electrons, and permeability of a solvent to the polyimide copolymer may be enhanced, thereby improving solubility of the copolymer.

In the structural unit represented by Formula 6, the bonding site with other structural units is located at a para position of the aromatic ring, such that the copolymer may have a rigid linear structure as a whole. In this case, the chains exist closely to each other so that intermolecular attraction may be increased, and segmental motion of the polymer chain is limited so that heat resistance and mechanical properties may be improved.

In some embodiments, a molar ratio of the structural unit represented by Formula 5 to the structural unit represented by Formula 6 may be 9:1 to 1:9, preferably 8:2 to 2:8, and more preferably 6:4 to 2:8. In this case, the workability and optical characteristics of the copolymer may be improved due to the structural unit represented by Formula 5, and heat resistance and mechanical properties may be improved together due to the structural unit represented by Formula 6.

In some embodiments, the first structural unit may further include a structural unit represented by Formula 7 above together with the structural units represented by Formulas 5 and 6 above.

The structural unit represented by Formula 7 may have a low thermal expansion coefficient due to a relatively high content of the aromatic ring having high thermal stability, and may have a low high-temperature weight loss and a high initial decomposition temperature.

According to exemplary embodiments, the second structural unit may include at least one of structural units represented by Formulas 8 to 10 below.

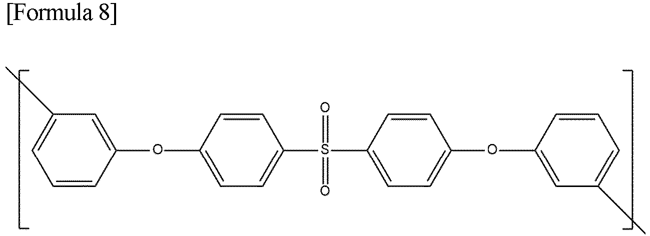

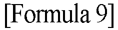

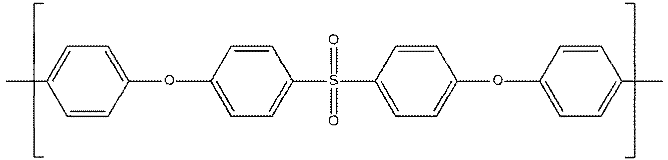

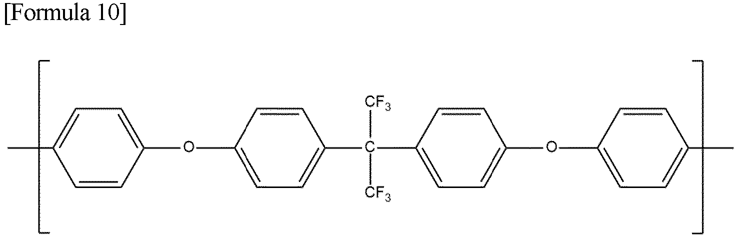

In some embodiments, the second structural unit may include the structural unit represented by Formula 8 above and the structural unit represented by Formula 9 above together.

In the structural unit represented by Formula 8, the bonding site with other structural units is located at the meta position of the aromatic ring, such that the copolymer may have a bent structure as a whole, and optical characteristics thereof may be improved. In addition, the copolymer may have a low thermal expansion coefficient due to a sulfonyl group having high electronegativity.

The structural unit represented by Formula 9 has a rigid linear structure in the form of para as a whole, and the sulfonyl group (SO₂) prevents the polymer chain from moving, such that the thermal stability and mechanical properties of the copolymer may be improved.

In some embodiments, a molar ratio of the structural unit represented by Formula 8 to the structural unit represented by Formula 9 may be 9:1 to 1:9, preferably 8:2 to 2:8, and more preferably 8:2 to 6:4. Within the above range, optical characteristics of the polyimide copolymer may be enhanced, while improving thermal stability and mechanical properties thereof.

In some embodiments, the second structural unit may further include a structural unit represented by Formula 10 above together with the structural units represented by Formulas 8 and 9 above.

In this case, it is difficult for the chain to freely move due to the substituent (-CF₃) having a large volume, such that the polyimide copolymer may have an increased free volume and a high glass transition temperature. In addition, the aromatic structures are linked by a thermally stable functional group (-C(CF₃)₂-), such that the thermal decomposition temperature and weight residue at high temperature may be increased.

In addition, a substituent, which is a strong electron withdrawing group, may attract π electrons of the aromatic structure, thus to prevent the electrons from moving. Accordingly, the polyimide copolymer may have a low yellow index, and optical transmittance may be improved.

In exemplary embodiments, the polyimide copolymer may include the first structural unit and the second structural unit together. For example, the molar ratio of the first structural unit to the second structural unit may be 8:2 to 2:8, and preferably 6:4 to 4:6.

Within the above range, the polyimide copolymer may have high mechanical properties, while improving the heat resistance and optical characteristics of the polyimide copolymer. For example, intermolecular stacking and attractive force between the chains may be increased by the first structural unit, and thereby heat resistance and mechanical properties of the polyimide copolymer may be improved. For example, the movement of π electrons is limited by the second structural unit, such that the optical characteristics of the polyimide copolymer may be improved. Further, as the substituents and/or functional groups having a large volume are included in the main chain, the polyimide copolymer may have a high glass transition temperature.

According to exemplary embodiments, the polyimide copolymer may have an intrinsic viscosity (IV) of 0.5 dl/g to 1.2 dl/g, and preferably 0.8 dl/g to 1.2 dl/g. Within the above range, solubilizing capacity in polar aprotic solvents such as dimethylacetamide (DMAc), dimethylformamide (DMF), dimethyl sulfoxide (DMSO), N-methyl-2-pyrrolidone (NMP), and the like may be excellent. For example, the intrinsic viscosity may be measured using an Ubbelohde viscometer after dissolving 0.1 g of the polyimide copolymer in 100 ml of dimethylacetamide (DMAc) at room temperature.

In the aromatic polyimide copolymer, most of the structural units are composed of an aromatic ring, and include an aromatic or cyclic structure at the terminal. Accordingly, the copolymer has a low intrinsic viscosity, and thereby solubility in the polar solvent may be very low.

The polyimide copolymer according to the exemplary embodiments has a small content of aromatic rings in the structural unit, and may have high solubility in the polar solvent as the polymer chain has a bent structure as a whole or has the substituent having a large volume.

For example, the polyimide copolymer may have a high intrinsic viscosity even in a fully imidized state since the solvent may easily permeate between the polyimide molecules. In this case, film moldability and workability by solvent molding may be improved, and the polyimide copolymer may be easily applied to electrical/electronic materials requiring low temperature processing.

According to exemplary embodiments, the polyimide copolymer may have a weight average molecular weight (weight average molecular weight in terms of polystyrene) of 50,000 g/mol to 2,000,000 g/mol, and preferably 50,000 g/mol to 1,000,000 g/mol. In some embodiments, the weight average molecular weight of the polyimide copolymer may be a 50,000 g/mol to 200,000 g/mol. For example, the weight average molecular weight may be measured using a gel permeation chromatography (GPC) method.

When the weight average molecular weight is less than 50,000 g/mol, mechanical properties and heat resistance of the polyimide copolymer may be reduced. When the weight average molecular weight exceeds 2,000,000 g/mol, the viscosity of the polyimide copolymer may be increased, and thereby solubility may be decreased. Within the above range, moldability and workability may be improved, while maintaining the desired mechanical properties and heat resistance of the polyimide copolymer.

The polyimide copolymer has an ether group and a polar functional group in the main chain, but may include a structural unit having a linear structure in the form of para, thus to have a rigid linear structure as a whole. Thereby, thermal properties such as a glass transition temperature, thermal decomposition temperature, weight residue at high temperature, and the like may be improved.

In some embodiments, the polyimide copolymer may have a glass transition temperature (Tg) of 180°C or higher, and preferably 200°C to 400°C. When the glass transition temperature is less than 180°C, high temperature stability may not be sufficiently provided. When the glass transition temperature exceeds 400°C, workability and moldability of the polyimide copolymer may be deteriorated.

In some embodiments, the polyimide copolymer may have a thermal decomposition temperature (Td) of 450°C or higher, and preferably 450°C to 500°C. For example, the thermal decomposition temperature may be a temperature at a time when the weight of the copolymer is reduced by 2% based on an initial weight by heating from room temperature at a heating rate of 10°C/min under a nitrogen gas atmosphere. Within the above range, thermal stability of the polyimide copolymer may be improved.

In some embodiments, the weight residue (wt_{R}⁶⁰⁰) of the polyimide copolymer at 600°C may be 40% or more, preferably 45% or more, and specifically 45% to 50% based on the initial weight. For example, the weight residue may be a percentage of the weight of the polyimide copolymer at 600°C based on the initial weight by heating from room temperature at a heating rate of 10°C/min under a nitrogen gas atmosphere.

The polyimide copolymer includes the above-described structural units, and has a high attractive force between adjacent polymer chains while securing dense intermolecular stacking, such that mechanical properties may be improved.

In some embodiments, the polyimide copolymer may have an ultimate strength of 70 MPa or more, and preferably 80 MPa or more. For example, the ultimate strength of the polyimide copolymer may be 80 MPa to 100 MPa.

In some embodiments, the polyimide copolymer may have an initial modulus of 2.2 GPa or more, and preferably 2.5 GPa or more. For example, the initial modulus of the polyimide copolymer may be 2.5 GPa to 3.5 GPa, and specifically 3.0 GPa to 3.5 GPa.

In some embodiments, the polyimide copolymer may have a percent elongation at break of 2% or more, and preferably 3% to 5%. Herein, the percent elongation at break means a percent increase in the length of the polyimide copolymer caused by a tensile load up to fracture.

Mechanical properties of the polyimide copolymer may be measured at a thickness of 70 µm under conditions of a tensile rate of 5 mm/min and a temperature of 23°C using a tensile tester (Instron 5564) in accordance with rules set by ASTM D882.

In some embodiments, the polyimide copolymer may be formed by performing ring-closing dehydration of a polyamic acid solution.

In exemplary embodiments, the polyimide copolymer may be formed of polyamic acid. For example, the polyamic acid solution may be formed through an imidization reaction.

The polyamic acid may include a copolymer of a diamine monomer and a dianhydride monomer.

For example, the polyamic acid may be prepared by stirring a mixture including a diamine monomer and a dianhydride monomer in a solvent. In this case, an acid anhydride group of the dianhydride monomer may be ring-opened and performed a condensation reaction with an amine group (-NH₂) of the diamine monomer to form a polyamic acid having an amide structure. The step of stirring the mixture may be performed under a nitrogen atmosphere.

In one embodiment, the step of stirring the mixture may include sequentially stirring at a temperature of about -10 to 10°C for about 0.5 to 2 hours, and stirring at a temperature of about 15 to 35°C for about 12 to 16 hours. When the above steps are sequentially performed, the mixture may be stabilized and a polymerization degree of the polyamic acid may be increased.

In some embodiments, the solvent may include acetone, toluene, methanol (CH₃OH), tetrahydrofuran (THF), pyridine, chloroform (CHCl₃), dichloromethane (CH₂Cl₂), dimethylacetamide (DMAc), dimethylformamide (DMF), dimethyl sulfoxide (DMSO), N-methyl-2-pyrrolidone (NMP) or the like. These may be used alone or in combination of two or more thereof.

In some embodiments, the dianhydride monomer may include a monomer having an alicyclic structure. For example, the dianhydride monomer may include 1,2,4,5-cyclohexanetetracarboxylic dianhydride.

When the polyamic acid includes the dianhydride monomer having an alicyclic structure, it is possible to suppress the charge transfer complex phenomenon due to π electrons of a benzene structure. In addition, as the polyimide copolymer has a short structure in which one alicyclic ring is constantly repeated by including only one alicyclic structure, the heat resistance and mechanical properties may be improved.

In some embodiments, the diamine monomer may include a monomer having an ether group. For example, the diamine monomer may include 3,4-oxydianiline, 1,3-bis(3-aminophenoxy)benzene, 1,4-bis(4-aminophenoxy)benzene, *m*-bis[4-(3-aminophenoxy)phenyl]-sulfone,*p*-bis[4-(4-aminophenoxy)phenyl]-sulfone and/or 2,2 -bis[4-(4-aminophenoxy)-phenyl]hexafluoropropane), etc.

When the diamine monomer includes the ether group, heat resistance of the polyimide copolymer may be improved by preventing the *π* electrons from moving. In addition, the ether group has a small volume, such that intermolecular stacking may be enhanced, and thereby mechanical properties of the polyimide copolymer may be improved.

In some embodiments, the dianhydride monomer and the diamine monomer may be polymerized in a molar ratio of 40:60 to 60:40, and preferably in a molar ratio of 45:55 to 55:45. In this case, as the molar ratios of the acid anhydride group of the dianhydride monomer and the amine group of the diamine monomer are similar to each other, the polymerization degree of the polyamic acid may be improved, and the mechanical properties of the polyimide copolymer formed thereof may be enhanced.

The formed polyamic acid solution may be dried, and then subjected to imidization, thus to prepare a polyimide copolymer.

The step of drying the polyamic acid solution may be performed at a temperature of about 40°C to 100°C for about 1 to 3 hours. For example, the drying step may include a first drying step performed at a temperature of about 40°C to 60°C for about 0.5 to 1.5 hours, and a second drying step performed at a temperature of about 70°C to 90°C for about 0.5 to 1.5 hours. Preferably, the first drying step may be performed at a temperature of about 50°C for 1 hour, and the second drying step may be performed at a temperature of about 80°C for 1 hour. In some embodiments, the drying steps may be performed in a vacuum state.

When performing the drying process in stages, it is possible to shorten the time for drying the mixed solution, and prevent the imidization reaction from being rapidly performed due to high temperature. For example, when performing the first drying step, water or solvent may be slowly volatilized while stabilizing the polyamic acid, and when performing the second drying step, water or solvent contained in the mixed solution may be completely removed.

The imidization step may be performed by a thermal imidization method, a chemical imidization method, a reprecipitation method or the like. Preferably, a stepwise thermal imidization method may be performed in an aspect of workability, high yield and high molecular weight. For example, through a heat treatment process, the polyamic acid may be subjected to ring-closing dehydration to be converted into polyimide.

The heat treatment process may include a first heat treatment step sequentially performed at temperatures of 100°C to 130°C, 130°C to 160°C and 160°C to 190°C for 0.5 to 1 hour, respectively, a second heat treatment step sequentially performed at temperatures of 190°C to 220°C and 220°C to 240°C for 0.5 to 1 hour, respectively, and a third heat treatment step performed at a temperature of 240°C to 260°C for 0.5 to 2 hours. In this case, when performing the heat treatment step in stages while slowly increasing the heating temperature, a conversion rate of the polyamic acid unit into the polyimide may be high, and for example, a complete imidization reaction may be implemented.

Preferably, the heat treatment step may include the first heat treatment step sequentially performed at temperatures of about 110°C, about 140°C and about 170°C for 30 minutes, respectively, the second heat treatment step sequentially performed at temperatures of about 195°C and about 220°C for 30 minutes, respectively, and the third heat treatment step performed at a temperature of about 250°C for 30 minutes.

When the heat treatment temperature of the heat treatment step is too high, deformation or shrinkage of the polyimide copolymer may occur, and a polyimide having a membrane or film form may not be provided.

Thereafter, the prepared polyimide copolymer may be dissolved in a polar solvent and then injected into a mold, followed by drying the solvent to form a polyimide film. In this case, the mold may be selected depending on the desired shape and thickness of the copolymer without limitation thereof. Since the above-described polyimide copolymer has a high intrinsic viscosity, solubility in the polar solvent may be increased, and moldability and workability of the polyimide copolymer may be improved.

In some embodiments, it is possible to further include a method of applying the polyamic acid solution on a substrate before the drying step of the polyamic acid solution. For example, water and solvent present in the polyamic acid solution may be removed through the drying process, thus to form the polyamic acid film.

As the substrate, for example, a polyethylene terephthalate (PET) substrate, a stainless steel (SUS) substrate or a glass substrate, etc. may be used. The application may be performed, for example, through an application method such as spin coating, bar coating, spray coating, slit coating or the like.

Thereafter, the above-described heat treatment process may be performed on the polyamic acid film to form a polyimide film including the above-described polyimide copolymer. In this case, it is possible to further include a method of removing the polyimide film from the substrate. For example, the substrate on which the polyimide film is formed may be immersed in water to peel off the polyimide film from the substrate.

According to exemplary embodiments, the polyimide film may have a thickness of 50 µm to 100 µm, and preferably 60 µm to 80 µm. Within the above range, transparency and mechanical properties of the polyimide film may be improved.

Hereinafter, specific experimental examples are proposed to facilitate understanding of the present invention.

### Examples and Comparative Examples

Example 1 not according to the invention 1.3 × 10⁻² moles (2.91 g) of 1,2,4,5-cyclohexanetetracarboxylic dianhydride as a dianhydride monomer was added in 12 ml of dimethylacetamide (DMAc), and the mixture was stirred at room temperature (25°C) for 30 minutes, then 1.3 × 10⁻² moles (2.60 g) of 3,4-oxydianiline as a diamine monomer was added to the mixture. Thereafter, the mixture was stirred at a temperature of 0°C for 1 hour in a nitrogen atmosphere, and further stirred at room temperature for 14 hours to prepare a polyamic acid (PAA) solution.

The prepared polyamic acid solution was coated on a glass plate using a coating bar. After the coating, the glass plate was maintained at a temperature of 50°C for 1 hour in a vacuum oven, and then further maintained at a temperature of 80°C for 1 hour.

Thereafter, a polyimide film was synthesized by sequentially performing heat treatment on the glass plate at temperatures of 110°C, 140°C, 170°C, 200°C, 230°C and 250°C for 30 minutes, respectively, in the nitrogen atmosphere. Then, the glass plate was immersed in 5 wt.% hydrofluoric acid (HF) aqueous solution to remove the synthesized polyimide film from the glass plate, thus to obtain a polyimide film having a thickness of 71 ± 3 µm.

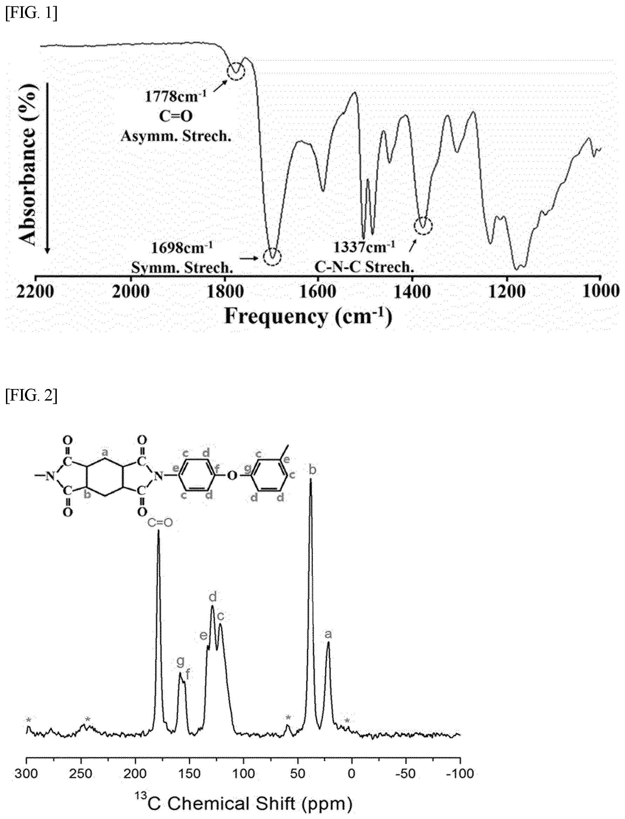

FIG. 1 illustrates FR-IR spectrum of the polyimide film according to Example 1 in a graph. Referring to FIG. 1, it can be confirmed that C=O stretching peaks appear at 1778 cm⁻¹ and 1698 cm⁻¹, respectively, and a peak corresponding to C-N-C stretching, which is a characteristic of imide, appears at 1337 cm⁻¹. Therefore, it can be confirmed that a polyimide copolymer was finally synthesized by the above-described heat treatment steps.

FIG. 2 illustrates ¹³C-NMR spectrum of the polyimide film according to Example 1 in a graph. In FIG. 2, 121.59 ppm, 128.78 ppm, 133.01 ppm, 154.99 ppm and 158.54 ppm represent ¹³C included in a benzene ring, and 21.31 ppm and 38.16 ppm represent ¹³C included in an aliphatic ring. Referring to FIG. 2, it can be confirmed that a polyimide copolymer having an aliphatic ring and an aromatic ring was synthesized by the above-described heat treatment steps.

### Examples 2 to 20 wherein examples 2 to 14 are not according to the invention

Polyimide films were prepared according to the same procedures as described in Example 1, except that 1.3 × 10⁻² moles of the diamine monomer was added as listed in Table 1 below.

**[TABLE 1]**

| Section (mol%) | Dianhydride monomer (A) | | | Diamine monomer (B) | | | | | | | |
|---|---|---|---|---|---|---|---|---|---|---|---|
| | A-1 | A-2 | A-3 | B-1 | B-2 | B-3 | B-4 | B-5 | B-6 | B-7 | B-8 |
| Example 1 | 50 | | | 50 | | | | | | | |
| Example 2 | 50 | | | | 50 | | | | | | |
| Example 3 | 50 | | | | | 50 | | | | | |
| Example 4 | 50 | | | | | | 50 | | | | |
| Example 5 | 50 | | | | | | | 50 | | | |
| Example 6 | 50 | | | | | | | | 50 | | |
| Example 7 | 50 | | | | 40 | 10 | | | | | |
| Example 8 | 50 | | | | 30 | 20 | | | | | |
| Example 9 | 50 | | | | 20 | 30 | | | | | |
| Example 10 | 50 | | | | 10 | 40 | | | | | |
| Example 11 | 50 | | | | | | 40 | 10 | | | |
| Example 12 | 50 | | | | | | 30 | 20 | | | |
| Example 13 | 50 | | | | | | 20 | 30 | | | |
| Example 14 | 50 | | | | | | 10 | 40 | | | |
| Example 15 | 50 | | | 40 | | | | | 10 | | |
| Example 16 | 50 | | | 30 | | | | | 20 | | |
| Example 17 | 50 | | | 20 | | | | | 30 | | |
| Example 18 | 50 | | | 10 | | | | | 40 | | |
| Example 19 | 50 | | | | 15 | 10 | 15 | 10 | | | |
| Example 20 | 50 | | | | 10 | 15 | 15 | 10 | | | |

### Comparative Examples 1 to 12

Polyimide films were prepared according to the same procedures as described in Example 1, except that 1.3 × 10⁻² moles of the dianhydride monomer and 1.3 × 10⁻² moles of a diamine monomer were added as listed in Table 2 below.

**[TABLE 2]**

| Section (mol%) | Dianhydride monomer (A) | | | Diamine monomer (B) | | | | | | | |
|---|---|---|---|---|---|---|---|---|---|---|---|
| | A-1 | A-2 | A-3 | B-1 | B-2 | B-3 | B-4 | B-5 | B-6 | B-7 | B-8 |
| Comparative Example 1 | | 50 | | 50 | | | | | | | |
| Comparative Example 2 | | 50 | | | 50 | | | | | | |
| Comparative Example 3 | | 50 | | | | 50 | | | | | |
| Comparative Example 4 | | 50 | | | | | 50 | | | | |
| Comparative Example 5 | | 50 | | | | | | 50 | | | |
| Comparative Example 6 | | 50 | | | | | | | 50 | | |
| Comparative Example 7 | | | 50 | 50 | | | | | | | |
| Comparative Example 8 | | | 50 | | | | | | 50 | | |
| Comparative Example 9 | | | 50 | | 25 | 25 | | | | | |
| Comparative Example 10 | | | 50 | | | | 25 | 25 | | | |
| Comparative Example 11 | 50 | | | | | | | | | 50 | |
| Comparative Example 12 | 50 | | | | | | | | | | 50 |

Specific ingredient names listed in Tables 1 and 2 are as follows.

### Dianhydride Monomer (A)

A-1: 1,2,4,5-cyclohexanetetracarboxylic dianhydride
A-2: pyromellitic dianhydride
A-3: 4,4'-(hexafluoroisopropylidene)diphthalic anhydride

### Diamine monomer (B)

B-1: 3,4-oxydianiline
B-2: 1,3-bis(3-aminophenoxy)benzene
B-3: 1,4-bis(4-aminophenoxy)benzene
B-4: m-bis[4-(3-aminophenoxy)phenyl]-sulfone
B-5: p-bis[4-(4-aminophenoxy)phenyl]-sulfone
B-6: 2,2-bis[4-(4-aminophenoxy)-phenyl]hexafluoropropane)
B-7: 4,4'-diaminodicyclohexylmethane
B-8: 2,2'-diaminobiphenyl

### Experimental example

### (1) Measurement of intrinsic viscosity

0.1 g of the polyimide copolymers according to the examples and the comparative examples were dissolved in 100 ml of DMAc at 25°C, then intrinsic viscosities were measured with an Ubbeload viscometer. When it was impossible to measure the intrinsic viscosity because the polyimide copolymer was not dissolved, the intrinsic viscosity was indicated by "-."

### (2) Evaluation of yellow index and light transmittance

Yellow indexes (YIs) of the polyimide films according to the examples and the comparative examples were measured using a spectrophotometer (CM-3600D, Konica Minolta) in accordance with rules set by ASTM E313.

In addition, light transmittances at a wavelength of 550 nm of the polyimide films according to the examples and the comparative examples were measured using a UV spectroscopic analyzer (UV-3600, Shimadzu).

### (3) Measurement of glass transition temperature (Tg)

Glass transition temperatures (Tgs) of the polyimide films according to the examples and the comparative examples were measured using a differential scanning calorimeter (DSC 200F3, Netzsch). Specifically, the glass transition temperature (Tg) was measured by increasing the temperature from -30°C to 300°C at a heating rate of 20°C/min.

**[TABLE 3]**

| Section (wt.%) | Intrinsic viscosity (dl/g) | Light transmittance evaluation (%) | Yellow index (YI) | Glass transition temperature (°C) |
|---|---|---|---|---|
| Example 1 | - | 86 | 3.13 | 199 |
| Example 2 | 0.90 | 86 | 4.02 | 182 |
| Example 3 | 0.77 | 86 | 4.06 | 210 |
| Example 4 | 0.87 | 87 | 2.21 | 190 |
| Example 5 | 0.83 | 86 | 3.91 | 225 |
| Example 6 | 0.91 | 85 | 2.32 | 299 |
| Example 7 | 0.89 | 86 | 4.02 | 197 |
| Example 8 | 0.86 | 86 | 4.04 | 200 |
| Example 9 | 0.79 | 86 | 4.05 | 203 |
| Example 10 | 0.77 | 86 | 4.05 | 209 |
| Example 11 | 0.88 | 87 | 2.31 | 205 |
| Example 12 | 0.85 | 87 | 2.75 | 219 |
| Example 13 | 0.85 | 87 | 2.87 | 221 |
| Example 14 | 0.82 | 85 | 3.70 | 223 |
| Example 15 | 0.51 | 86 | 3.01 | 215 |
| Example 16 | 0.72 | 86 | 2.69 | 234 |
| Example 17 | 0.80 | 87 | 2.41 | 267 |
| Example 18 | 0.88 | 86 | 2.33 | 288 |
| Example 19 | 0.86 | 87 | 3.01 | 214 |
| Example 20 | 0.83 | 87 | 3.03 | 215 |

**[TABLE 4]**

| Section (wt.%) | Intrinsic viscosity (dl/g) | Light transmittance evaluation (%) | Yellow index (YI) | Glass transition temperature (°C) |
|---|---|---|---|---|
| Comparative Example 1 | - | 56 | 19.14 | 243 |
| Comparative Example 2 | 0.44 | 54 | 19.95 | 228 |
| Comparative Example 3 | 0.31 | 52 | 20.51 | 276 |
| Comparative Example 4 | 0.37 | 59 | 19.29 | 240 |
| Comparative Example 5 | 0.36 | 60 | 20.17 | 286 |
| Comparative Example 6 | 0.47 | 61 | 18.23 | 334 |
| Comparative Example 7 | - | 69 | 8.93 | 219 |
| Comparative Example 8 | 0.51 | 75 | 7.89 | 302 |
| Comparative Example 9 | 0.49 | 66 | 9.33 | 199 |
| Comparative Example 10 | 0.57 | 72 | 9.01 | 204 |
| Comparative Example 11 | 0.81 | 84 | 4.16 | 122 |
| Comparative Example 12 | 0.74 | 75 | 6.17 | 201 |

Referring to Tables 3 and 4, the polyimide films according to exemplary embodiments have a light transmittance of 85% or more at a wavelength of 550 nm and a low yellow index of 4.5 or less. In addition, these polyimide films generally have a high intrinsic viscosity, such that it is possible to have improved solubility in a polar solvent.

In the case of Comparative Examples 1 to 10 having an aromatic structure as a whole, the content of the aromatic ring is increased to cause a deterioration in the optical characteristics and a deterioration in the solubility due to a low intrinsic viscosity.

In the case of Comparative Example 11 having a structure derived from an alicyclic diamine monomer, thermal stability and mechanical properties were remarkably deteriorated, and in the case of Comparative Example 12 which does not include an ether group, optical characteristics were reduced.

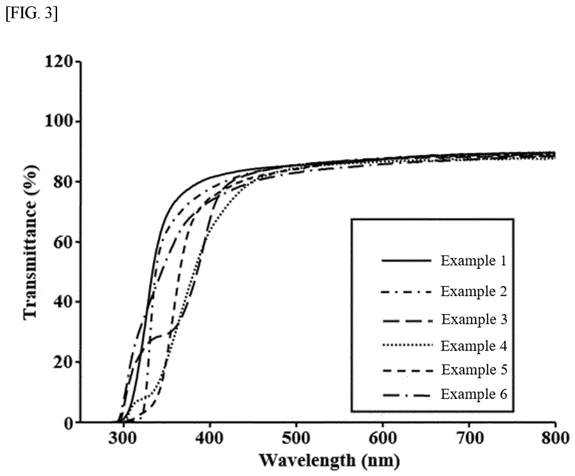

FIG. 3 illustrates the UV transmittance of the polyimide films according to Examples 1 to 6. Referring to FIG. 3, in the case of Examples 1 to 6, it can be confirmed that a cut-off wavelength appears at a wavelength of 310 nm or less, and thus light transmission is performed before the visible light region. In addition, it can be confirmed that these polyimide films have an improved transmittance of 80% or more at a wavelength of 500 nm or more.

### (4) Evaluation of heat resistance

### 1) Thermal decomposition temperature (Td) and weight residue (wt_{R}⁶⁰⁰)

Thermal decomposition temperatures (Tds) of the polyimide films according to the examples were measured using a thermogravimetric analyzer (TGA Q500, TA instrument). Specifically, the thermal decomposition temperature (Td) was measured by measuring a temperature at a time when the initial weight of the polyimide film is decreased by 2% by increasing the temperature from 0°C to 600°C at a heating rate of 10°C/min. Thereafter, the weight residue (wt_{R}⁶⁰⁰) at 600°C was measured.

### 2) Thermal expansion coefficient (CTE)

Thermal expansion coefficients (CTEs) of the polyimide films according to the examples were measured at a temperature of 50 to 150°C under conditions of a heating rate of 10°C/min and a load of 5 g using a thermomechanical analyzer (TMA 2940, TA instrument).

**[TABLE 5]**

| Section (wt.%) | Thermal decomposition temperature (°C) | Weight residue (wtᵣ⁶⁰⁰,%) | Thermal expansion coefficient (ppm/°C) |
|---|---|---|---|
| Example 1 | 469 | 42 | 47.74 |
| Example 2 | 449 | 41 | 52.61 |
| Example 3 | 469 | 43 | 51.41 |
| Example 4 | 452 | 46 | 45.43 |
| Example 5 | 451 | 42 | 46.68 |
| Example 6 | 473 | 48 | 60.37 |
| Example 7 | 450 | 41 | 53 |
| Example 8 | 455 | 42 | 52.34 |
| Example 9 | 456 | 42 | 51.91 |
| Example 10 | 468 | 43 | 51.58 |
| Example 11 | 453 | 46 | 45.51 |
| Example 12 | 470 | 49 | 46.37 |
| Example 13 | 448 | 42 | 46.53 |
| Example 14 | 440 | 42 | 46.65 |
| Example 15 | 470 | 43 | 49.18 |
| Example 16 | 472 | 45 | 50.47 |
| Example 17 | 476 | 51 | 51.39 |
| Example 18 | 471 | 48 | 56.27 |
| Example 19 | 465 | 44 | 49.24 |
| Example 20 | 468 | 48 | 47.71 |

### (5) Mechanical properties

After cutting the polyimide films according to the examples into a size of 5 mm × 70 mm, ultimate strengths, initial modulus, and percent elongation at break were measured at a tensile rate of 5 mm/min and a temperature of 23°C using a tensile tester (Instron 5564, Instron) in accordance with rules set by ASTM D882. Each value was measured 12 times, and the measured value was calculated as an average value of the remaining values excluding the maximum and minimum values from each value.

### (6) Gas permeability

Oxygen gas permeability of the polyimide films according to the embodiments was measured for 30 minutes under conditions of a temperature of 23°C and 100% oxygen (O₂) concentration at 0% RH using oxygen permeability equipment (OX-TRAN 2/61, Mocon) in accordance with rules set by ASTM D3985.

**[TABLE 6]**

| Section (wt.%) | Ultimate strength (MPa) | Initial modulus (GPa) | Percent elongation at break (%) | Gas permeability (cc/m²·day) |
|---|---|---|---|---|
| Example 1 | 88 | 3.05 | 3 | 1.88 |
| Example 2 | 91 | 3.14 | 3 | 2.62 |
| Example 3 | 91 | 3.13 | 5 | 0.63 |
| Example 4 | 70 | 2.54 | 2 | 1.50 |
| Example 5 | 72 | 2.62 | 3 | 0.39 |
| Example 6 | 72 | 2.27 | 4 | 13.69 |
| Example 7 | 92 | 3.14 | 3 | 2.73 |
| Example 8 | 91 | 3.14 | 4 | 2.01 |
| Example 9 | 91 | 3.13 | 4 | 1.63 |
| Example 10 | 91 | 3.12 | 5 | 0.94 |
| Example 11 | 70 | 2.56 | 3 | 1.17 |
| Example 12 | 70 | 2.58 | 3 | 0.85 |
| Example 13 | 71 | 2.61 | 3 | 0.73 |
| Example 14 | 72 | 2.61 | 3 | 0.41 |
| Example 15 | 88 | 3.04 | 3 | 2.06 |
| Example 16 | 87 | 3.07 | 3 | 2.79 |
| Example 17 | 81 | 2.79 | 4 | 5.18 |
| Example 18 | 75 | 2.58 | 4 | 9.37 |
| Example 19 | 85 | 3.01 | 4 | 1.48 |
| Example 20 | 83 | 2.97 | 4 | 0.98 |

Referring to Tables 5 and 6, in the case of Examples 7 to 14 including both a structural unit derived from a diamine monomer B-2 or B-4 having a meta-binding structure, and a structural unit derived from a diamine monomer B-3 or B-5 having a para-bonding structure, high glass transition temperature and improved optical characteristics were simultaneously satisfied due to the molar ratio of each structural unit.

In the case of Example 6, as the polyimide copolymer had a significantly bent structure as a whole, it was difficult to secure the dense intermolecular stacking, and thus mechanical properties and gas permeability were somewhat reduced.

In the case of Examples 15 to 20 using both a diamine monomer containing no polar substituent (B-1 to B-3) and a diamine monomer containing a polar substituent (B-4 to B-6), mechanical strength was improved due to a structural unit derived from the diamine monomer containing no polar substituent, and optical characteristics and heat resistance were secured due to a structural unit derived from the diamine monomer containing a polar substituent.

## Claims

1. A polyimide copolymer comprising:
a structural unit derived from dianhydride represented by Formula 1 below; and
a structural unit derived from aromatic diamine including an ether group,
wherein the structural unit derived from the aromatic diamine comprises a first structural unit comprising at least one of structural units represented by Formulas 5 to 7 below and a second structural unit represented by Formula 4 below,
wherein a molar ratio of the first structural unit to the second structural unit is 8:2 to 2:8, and
a content of the structural unit derived from dianhydride, the first structural unit and the second structural unit is 100mol% on a total repeating unit of the polyimide copolymer: 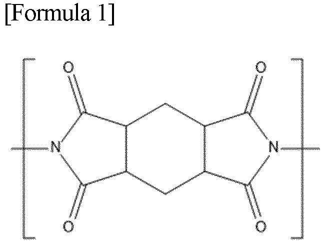 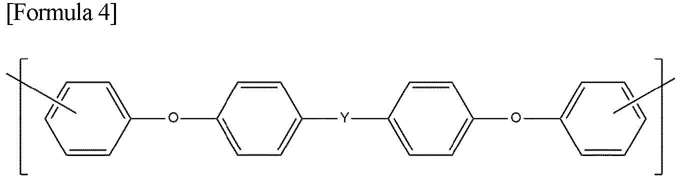 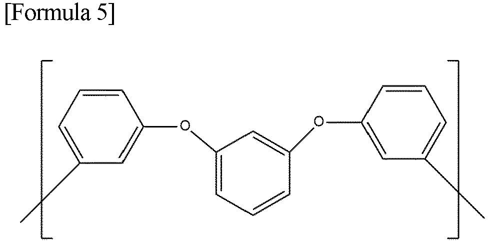 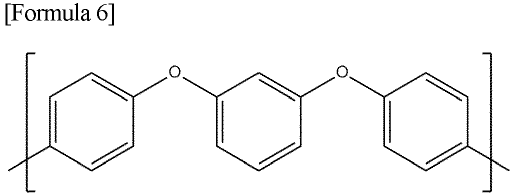 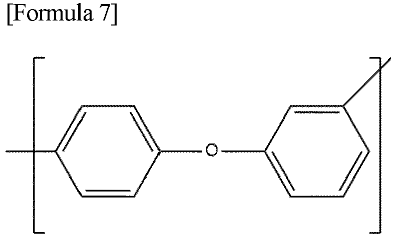
in Formula 4, Y is -S(=O)₂- or -C(CF₃)₂-.

2. The polyimide copolymer according to claim 1, wherein the first structural unit comprises the structural unit represented by Formula 5 and the structural unit represented by Formula 6.

3. The polyimide copolymer according to claim 2, wherein a molar ratio of the structural unit represented by Formula 5 to the structural unit represented by Formula 6 is 6:4 to 2:8.

4. The polyimide copolymer according to claim 1, wherein the second structural unit comprises a structural unit represented by Formula 8 below and a structural unit represented by Formula 9 below:

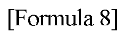

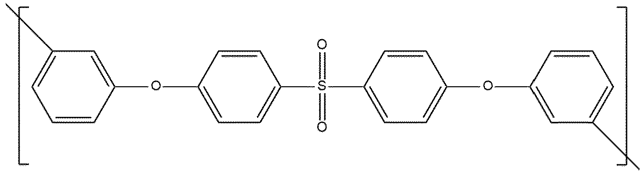

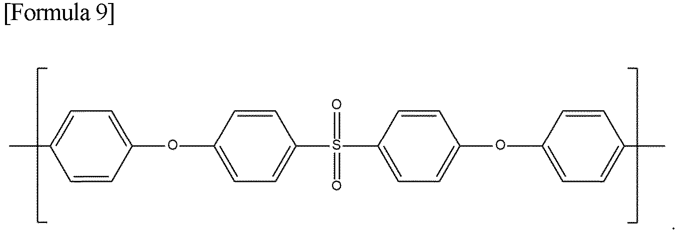

5. The polyimide copolymer according to claim 4, wherein a molar ratio of the structural unit represented by Formula 8 to the structural unit represented by Formula 9 is 8:2 to 6:4.

6. The polyimide copolymer according to claim 1, wherein the polyimide copolymer has an intrinsic viscosity of 0.5 dl/g to 1.2 dl/g, the intrinsic viscosity being measured using an Ubbelohde viscometer after dissolving 0.1 g of the polyimide copolymer in 100 ml of dimethylacetamide (DMAc) at room temperature.

7. The polyimide copolymer according to claim 1, wherein the polyimide copolymer has a weight average molecular weight of 50,000 g/mol to 200,000 g/mol, the weight average molecular weight being measured using gel permeation chromatography (GPC).

8. The polyimide copolymer according to claim 1, wherein the polyimide copolymer has a glass transition temperature (Tg) of 200°C to 400°C, the glass transition temperature (Tg) being measured by increasing the temperature of the polyimide copolymer from -30°C to 300°C at a heating rate of 20°C/min.

9. A polyimide film comprising the polyimide copolymer according to claim 1.

10. The polyimide film according to claim 9, wherein the polyimide film has a yellow index (YI) of 4.5 or less measured at a thickness of 70 µm in accordance with rules set by ASTM E313, and a transmittance of 85% or more at a wavelength of 550 nm.

## Patentansprüche

1. Polyimid-Copolymer, umfassend:
eine Struktureinheit, die von einem Dianhydrid abgeleitet ist, das durch die nachstehende Formel 1 dargestellt ist, und
eine Struktureinheit, die von einem aromatischen Diamin abgeleitet ist und die eine Ethergruppe umfasst,
wobei die Struktureinheit, die von einem aromatischen Diamin abgeleitet ist, eine erste Struktureinheit, die mindestens eine der durch die nachstehenden Formeln 5 bis 7 dargestellten Struktureinheiten umfasst, und eine zweite Struktureinheit, die durch die nachstehende Formel 4 dargestellt ist, umfasst,
wobei das Molverhältnis der ersten Struktureinheit zu der zweiten Struktureinheit 8:2 bis 2:8 beträgt,
und
ein Gehalt der Struktureinheit, die von einem Dianhydrid abgeleitet ist, der ersten Struktureinheit und der zweiten Struktureinheit 100 Mol%, bezogen auf eine Gesamtwiederholungseinheit des Polyimid-Copolymers, beträgt: 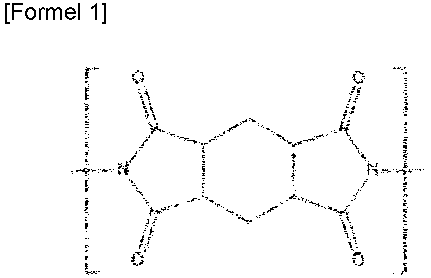 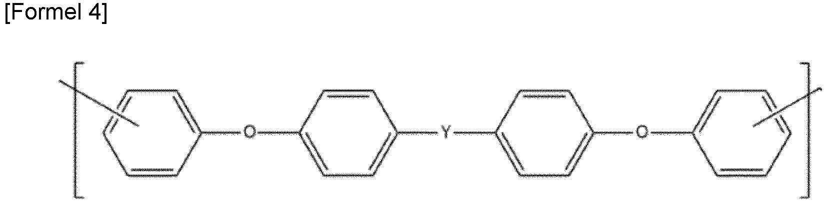 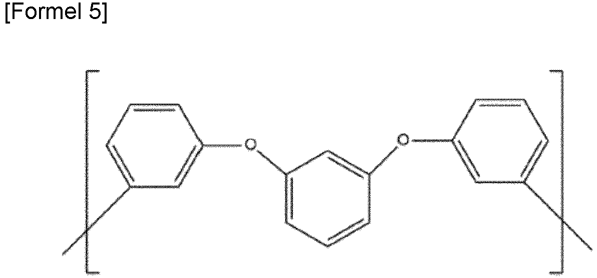 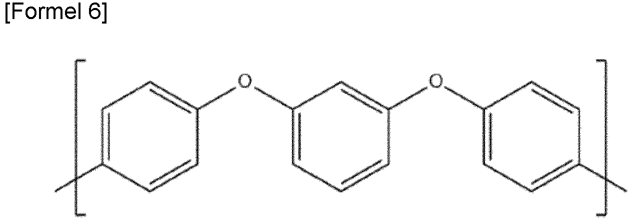 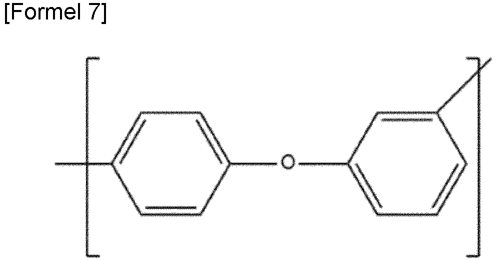
wobei in Formel 4 Y für -S(=O)₂- oder -C(CF₃)₂- steht.

2. Polyimid-Copolymer gemäß Anspruch 1, wobei die erste Struktureinheit die durch die Formel 5 dargestellte Struktureinheit und die durch die Formel 6 dargestellte Struktureinheit umfasst.

3. Polyimid-Copolymer gemäß Anspruch 2, wobei das Molverhältnis der durch die Formel 5 dargestellten Struktureinheit zu der durch die Formel 6 dargestellten Struktureinheit 6:4 bis 2:8 beträgt.

4. Polyimid-Copolymer gemäß Anspruch 1, wobei die zweite Struktureinheit eine durch die nachstehende Formel 8 dargestellte Struktureinheit und eine durch die nachstehende Formel 9 dargestellte Struktureinheit umfasst:

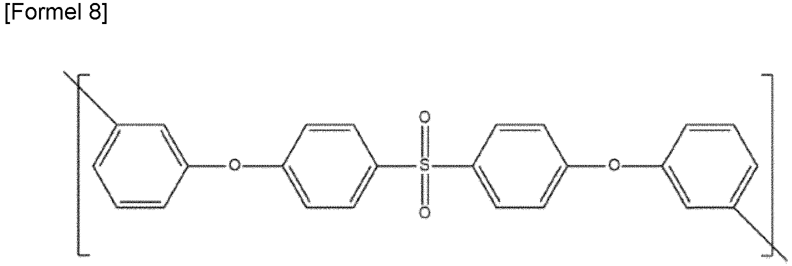

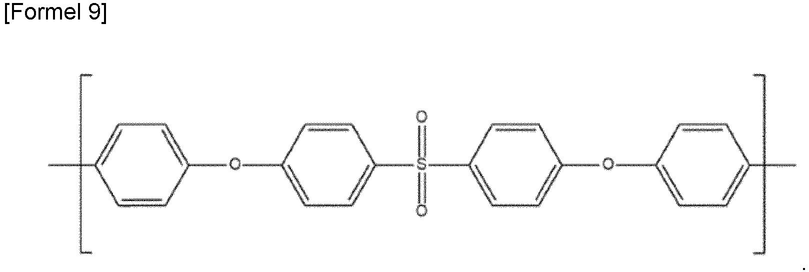

5. Polyimid-Copolymer gemäß Anspruch 4, wobei das Molverhältnis der durch die Formel 8 dargestellten Struktureinheit zu der durch die Formel 9 dargestellten Struktureinheit 8:2 bis 6:4 beträgt.

6. Polyimid-Copolymer gemäß Anspruch 1, wobei das Polyimid-Copolymer eine intrinsische Viskosität von 0,5 dl/g bis 1,2 dl/g aufweist, wobei die intrinsische Viskosität unter Verwendung eines Ubbelohde-Viskosimeters nach Auflösen von 0,1 g des Polyimid-Copolymers in 100 ml Dimethylacetamid (DMAc) bei Raumtemperatur gemessen wird.

7. Polyimid-Copolymer gemäß Anspruch 1, wobei das Polyimid-Copolymer ein gewichtsmittleres Molekulargewicht von 50.000 g/mol bis 200.000 g/mol aufweist wobei das gewichtsmittlere Molekulargewicht unter Verwendung von Gelpermeationschromatographie (GPC) gemessen wird.

8. Polyimid-Copolymer gemäß Anspruch 1, wobei das Polyimid-Copolymer eine Glasübergangstemperatur (Tg) von 200 °C bis 400 °C aufweist, wobei die Glasübergangstemperatur (Tg) durch Erhöhen der Temperatur des Polyimid-Copolymers von -30 °C auf 300 °C bei einer Erwärmungsrate von 20 °C/min gemessen wird.

9. Polyimid-Folie, die das Polyimid-Copolymer gemäß Anspruch 1 umfasst.

10. Polyimid-Folie gemäß Anspruch 9, wobei die Polyimid-Folie einen Vergilbungsindex (YI) von 4,5 oder weniger, gemessen bei einer Dicke von 70 µm gemäß den durch ASTM E313 festgelegten Regeln, und eine Transmission von 85 % oder mehr bei einer Wellenlänge von 550 nm aufweist.

## Revendications

1. Copolymère de polyimide comprenant :
un motif structural dérivé d'un dianhydride représenté par la formule 1 ci-dessous ; et
un motif structural dérivé d'une diamine aromatique incluant un groupe éther,
dans lequel le motif structural dérivé de la diamine aromatique comprend un premier motif structural comprenant au moins l'un des motifs structuraux représentés par les formules 5 à 7 ci-dessous et un second motif structural représenté par la formule 4 ci-dessous,
dans lequel un rapport molaire du premier motif structural au second motif structural est de 8:2 à 2:8, et
un teneur en motif structural dérivé d'un dianhydride, du premier motif structural et du second motif structural est de 100 % en moles sur un motif répété total du copolymère de polyimide : 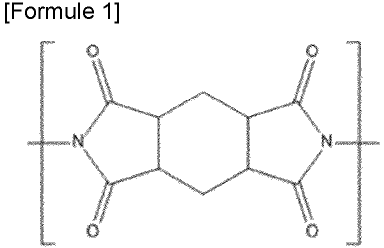 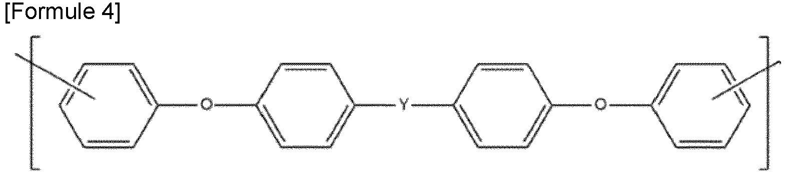 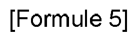 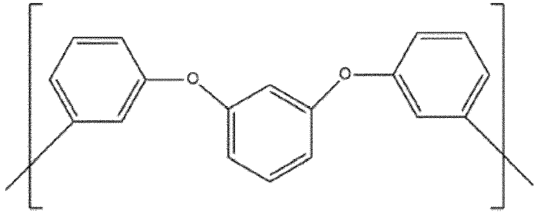 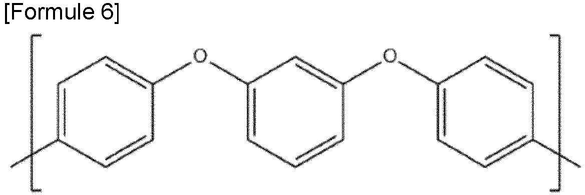 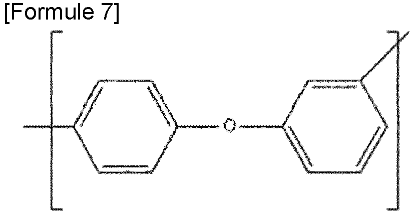
dans la formule 4, Y est -S(=O)₂- ou -C(CF₃-)₂-.

2. Copolymère de polyimide selon la revendication 1, dans lequel le premier motif structural comprend le motif structural représenté par la formule 5 et le motif structural représenté par la formule 6.

3. Copolymère de polyimide selon la revendication 2, dans lequel un rapport molaire du motif structural représenté par la formule 5 au motif structural représenté par la formule 6 est de 6:4 à 2:8.

4. Copolymère de polyimide selon la revendication 1, dans lequel le second motif structural comprend un motif structural représenté par la formule 8 ci-dessous et un motif structural représenté par la formule 9 ci-dessous :

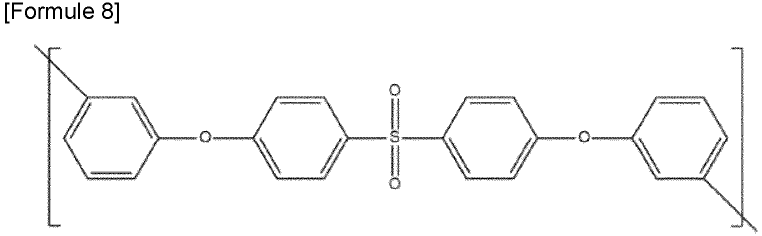

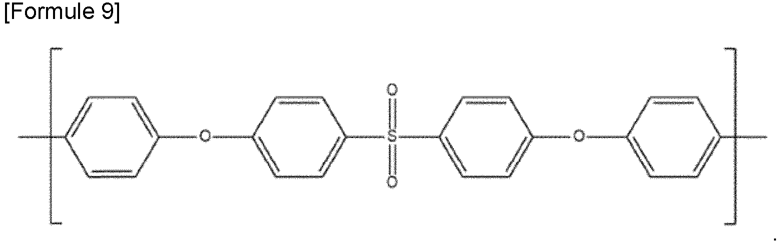

5. Copolymère de polyimide selon la revendication 4, dans lequel un rapport molaire du motif structural représenté par la formule 8 au motif structural représenté par la formule 9 est de 8:2 à 6:4.

6. Copolymère de polyimide selon la revendication 1, dans lequel le copolymère de polyimide a une viscosité intrinsèque de 0,5 dl/g à 1,2 dl/g, la viscosité intrinsèque étant mesurée en utilisant un viscosimètre Ubbelohde après dissolution de 0,1 g du copolymère de polyimide dans 100 ml de diméthylacétamide (DMAc) à température ambiante.

7. Copolymère de polyimide selon la revendication 1, dans lequel le copolymère de polyimide a un poids moléculaire moyen en poids de 50 000 g/mol à 200 000 g/mol, le poids moléculaire moyen en poids étant mesuré en utilisant une chromatographie par perméation de gel (GPC).

8. Copolymère de polyimide selon la revendication 1, dans lequel le copolymère de polyimide a une température de transition vitreuse (Tg) de 200 °C à 400 °C, la température de transition vitreuse (Tg) étant mesurée en augmentant la température du copolymère de polyimide de -30 °C à 300 °C à une vitesse de chauffage de 20 °C/min.

9. Film de polyimide comprenant le copolymère de polyimide selon la revendication 1.

10. Film de polyimide selon la revendication 9, dans lequel le film de polyimide a un indice de jaune (Yl) inférieur ou égal à 4,5 mesuré à une épaisseur de 70 µm conformément aux règles fixées par la norme ASTM E313, et une transmittance supérieure ou égale à 85 % à une longueur d'onde de 550 nm.
